# EUROPEAN PATENT SPECIFICATION

(11) **EP 3 467 843 B1**
(45) Date of publication and mention of the grant of the patent: **05.08.2020**
(21) Application number: 17802421.2
(22) Date of filing: 24.03.2017
(51) Int. Cl.: G21C 17/10, G21C 17/108

(54) **REACTOR OUTPUT MONITORING DEVICE**
REAKTORAUSGANGSÜBERWACHUNGSVORRICHTUNG
DISPOSITIF DE SURVEILLANCE DE SORTIE DE RÉACTEUR

(30) Priority: 24.05.2016 JP 2016102935
(43) Date of publication of application: 10.04.2019
(73) Proprietor: Hitachi, Ltd., Tokyo 100-8280 (JP)
(72) Inventor: OKADA Kouichi, Tokyo 100-8280 (JP); TADOKORO Takahiro, Tokyo 100-8280 (JP); FUSHIMI Atsushi, Tokyo 100-8280 (JP); NAGUMO Yasushi, Tokyo 100-8280 (JP); UENO Katsunori, Tokyo 100-8280 (JP); UENO Yuichiro, Tokyo 100-8280 (JP); HATAKEYAMA Shuichi, Tokyo 100-8280 (JP)
(74) Representative: Strehl Schübel-Hopf & Partner
(86) International application number: PCT/JP2017/011911
(87) International publication number: WO 2017/203819

(56) References cited:
- EP-A1- 2 453 443
- WO-A1-2015/026619
- JP-A- 2000 221 293
- JP-A- 2002 202 395
- JP-A- 2007 017 323
- JP-A- 2007 078 559
- US-A- 5 333 159

## Description

### Technical Field

The present invention relates to a reactor power monitoring apparatus.

### Background Art

An apparatus that monitors reactor power by a detector installed outside a reactor pressure vessel (RPV) in a boiling water reactor (BWR) is disclosed in Patent Document 1. Patent Document 1 discloses "the apparatus includes a RPV accommodating a reactor core, a neutron transport pipe installed in the RPV, and a neutron detector installed outside the RPV or inside the RPV in an opposing relationship to an end portion of the neutron transport pipe, the neutron transport pipe configuring, in the inside thereof, a neutron transport path for neutrons generated in the reactor core."

### Prior Art Document

### Patent Document

Patent Document 1: JP-2008-175732-A US 5 333 159 A discloses a radiation monitoring device with the features in the preamble of present claim 1. Another conventional radiation detector is described in EP 2 453 443 A1.

### Summary of the Invention

### Problem to be Solved by the Invention

In a conventional BWR reactor, since water that is a moderator in the reactor core is water of a two-phase flow, the moderation situation of neutrons varies by an influence of the void fraction. Therefore, it is insufficient to monitor the reactor power just by measuring neutrons that leak outwardly in radial directions of the RPV. Therefore, the BWR includes LPRMs (Local Power Range Monitors) in order to monitor the reactor power. The local power is monitored by measuring a neutron flux by the LPRM. The LPRM is comprised of four fission chambers per one LPRM assembly. One LPRM assembly is installed per four fuel assemblies. Therefore, the fission chambers of LPRM assemblies monitor the local power in each axial and radial direction. In this manner, in the entire BWR reactor, approximately 200 fission chambers are installed to monitor the local power. One LPRM assembly is installed per one nuclear instrumentation tube, and a penetration hole is provided in the RPV in order to transmit signals. Accordingly, the number of RPV penetration holes for installation of the LPRM per one BWR is approximately 50.

Such a configuration of a nuclear instrumentation system as described above is accompanied by the necessity for some conservations. One of the conservations is an inspection or conservation work of the RPV penetration holes. Such a structure as an RPV penetration hole requires an inspection for checking that a penetration does not suffer from water leakage or a crack and a conservation work in the case where such water leakage or a crack occurs. Another one of the conservations is exchange of detectors. A fission chamber for the LPRM normally installed in a reactor undergoes irradiation of neutrons generated in the reactor core region and deteriorates in sensitivity. Therefore, it is necessary to exchange the detector at regular intervals. Alternatively, it is necessary to periodically carry out calibration by a TIP (Traversing In-core Prove) that requires a driving mechanism. Further, since the detector is installed in the reactor, in the case where the detector fails, the detector cannot be exchanged readily.

As a method for reducing the necessity for or the frequency of such conservations, a method in which a detector for power monitoring is installed outside the reactor is available. As an example, a method of providing such a neutron transport pipe as described in the prior art document such that neutrons are transported to the outside of the reactor is conceivable. According to this method, since no detector exists in the reactor, a cable for transmission is not required. Accordingly, RPV penetration holes are not required. However, in the case of the technique of the prior art document, there is a subject in identification of a monitoring position in an axial direction, and the technique is not suitable for monitoring of local power in an axial direction having similar spatial resolution of the LPRM.

It is an object of the present invention to provide a reactor power monitoring apparatus suitable for monitoring of local power in an axial direction having similar spatial resolution of an LPRM.

### Means for Solving the Problem

In order to solve the subject described above, one of representative nuclear instrumentation system of the present invention includes a plurality of metal-containing plates installed at different locations in an axial direction in the inside of a nuclear instrumentation tube and formed from principal components different from each other, and a gamma ray detector installed outside a RPV and configured to measure gamma rays emitted by a nuclear reaction between neutrons generated in the reactor and the metal-containing plates.

### Effect of the Invention

According to the present invention, it is possible to provide a reactor power monitoring apparatus suitable for monitoring of local power in an axial direction of a similar spatial resolution of an LPRM.

### Brief Description of the Drawings

FIG. 1 is a view depicting a concept of a reactor instrumentation system in the present invention.
FIG. 2 is a view depicting arrangement of a metal-containing plate in a nuclear instrumentation tube and a method of obtaining local power information.
FIG. 3 is a view depicting an energy spectrum obtained by a gamma ray detector.
FIG. 4 is a view depicting an example of a shield structure for the gamma ray detector
FIG. 5 is a view depicting the example of the shield structure for the gamma ray detector.
FIG. 6 is a view depicting an example of a case in which the nuclear instrumentation system of the present invention is applied as TIP alternative equipment.

### Modes for Carrying Out the Invention

In the following, embodiments are described with reference to the drawings. Since like numerals applied in different figures denote like elements, description of them is omitted. It is to be noted that, although the embodiments are described taking a BWR as a target for the convenience of description, even if the application target of the present invention is a pressurized water reactor, monitoring of local power is possible.

### [Embodiment 1]

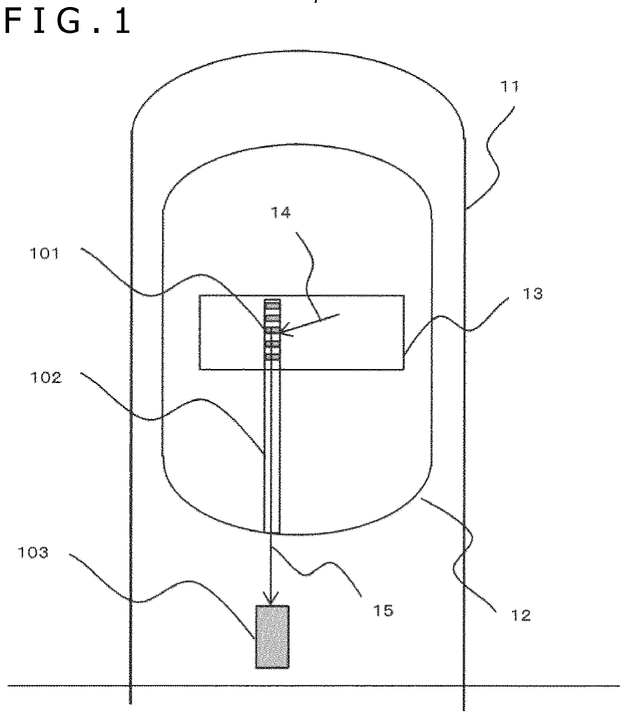

In the following, an embodiment of the present invention is described with reference to FIGS. 1 to 4.

FIG. 1 is a view depicting an overview of operation of a nuclear instrumentation system of the present embodiment. The configuration that a reactor pressure vessel 12 exists in the inside of a primary containment vessel 11 and a reactor core 13 exists in the inside of the reactor pressure vessel 12 is same as that of a conventional BWR. While, in the conventional BWR, a detector for an LPRM for monitoring local power is installed in a nuclear instrumentation tube 102, in the present embodiment, metal-containing plates 101 are installed. The metal-containing plates 101 cause a nuclear reaction with neutrons 14 to emit a prompt gamma ray 15 of high energy. If an example is given, then Sc is available. A prompt gamma ray having energy exceeding 8 MeV is emitted by a neutron capture reaction of Sc and thermal neutrons. This prompt gamma ray 15 is measured by a gamma ray detector 103 installed in a direction in which it is opposed to a termination of the nuclear instrumentation tube 102 below the reactor pressure vessel 12. At this time, the termination of the nuclear instrumentation tube 102 may be a pressure vessel. The direction opposed to the termination of the nuclear instrumentation tube 102 intends that a sensor unit of the gamma ray detector 103 exists on an extension line of an advancing direction of the prompt gamma ray 15 that is emitted from the metal-containing plates 101 and then passes the nuclear instrumentation tube 102. The foregoing is a basic configuration of the present embodiment.

After the prompt gamma ray 15 is generated in the metal-containing plate, a part of the prompt gamma ray flies in the nuclear instrumentation tube 102 toward the gamma ray detector 103. At this time, since the prompt gamma ray 15 has high energy, it can go through the reactor pressure vessel 12. Accordingly, even if the nuclear instrumentation tube 102 does not extend through the reactor pressure vessel 12, the prompt gamma ray 15 can reach the gamma ray detector 103. Accordingly, the nuclear instrumentation tube 102 does not extend through the reactor pressure vessel 12 but terminates in or in the proximity of the reactor pressure vessel. Further, although preferably the inside of the nuclear instrumentation tube ideally is vacuum, even if gas such as air is encapsulated with an air pressure similar to the in-reactor pressure, since the energy of the prompt gamma ray of the target is high, the probability that an interaction may occur between gas atoms and the gamma ray in the nuclear instrumentation tube 102 is low and the influence of attenuation of the prompt gamma ray 15 is almost zero.

In order to install the metal-containing plates 101 to monitor the local power, it is necessary to install the metal-containing plates 101 at a position suitable for monitoring. In the conventional BWR, both of monitoring of the local power by the LPRM and monitoring of the local power by the TIP are used. While, in the monitoring by the LPRM, four-point monitoring is performed in an axial direction by LPRM detectors installed at four locations in the axial direction, in the monitoring by the TIP, since the TIP includes a driving mechanism and can continuously vary the monitoring position with a fixed degree of freedom, the local power in the axial direction can be monitored more finely than the monitoring by the LPRM. Since the metal-containing plates 101 of the present embodiment do not have a driving mechanism, continuous monitoring cannot be performed. However, since a structure as a detector like an LPRM is not required, the metal-containing plates 101 can be installed finely in comparison with a detector for the LPRM.

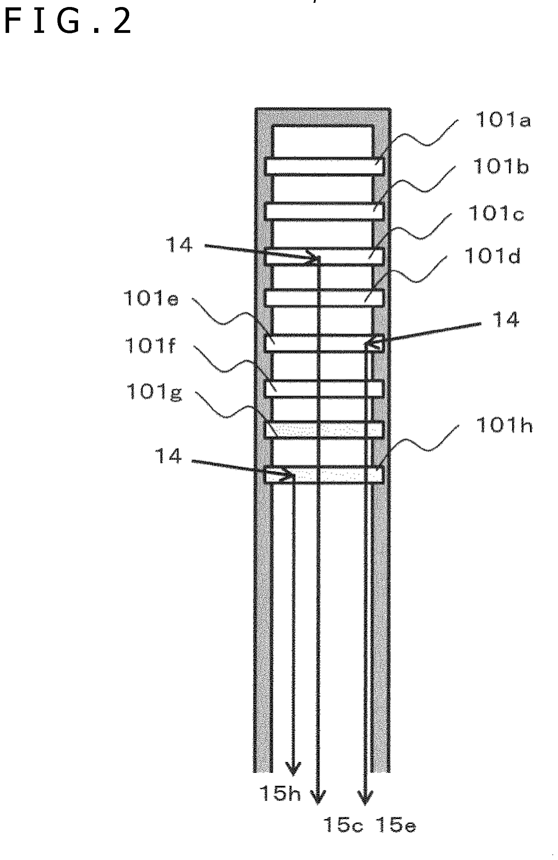

FIG. 2 depicts an example in which eight metal-containing plates are installed in an axial direction. The plates from a metal-containing plate 101a to a metal-containing plate 101h are different from each other in principal component. The energy of the prompt gamma rays 15 emitted by a nuclear reaction with the neutrons 14 differ among different kinds of metal. As an example, it is assumed that the metal-containing plate 101c is Ni; the metal-containing plate 101e is Cu; and the metal-containing plate 101h is V. A neutron capture reaction occurs between Ni-58 that is an isotope of Ni and neutrons 14, and a prompt gamma ray 15c having energy of approximately 9 MeV is emitted. A neutron capture reaction occurs between Cu-63 that is an isotope of Cu and neutrons 14, and a prompt gamma ray 15e having energy of approximately 8 MeV is emitted. A neutron capture reaction occurs between V-51 that is an isotope of V and neutrons 14, and a prompt gamma ray 15h having energy of approximately 7 MeV is emitted.

By measuring the gamma rays having different energies from each other, monitoring of local power can be performed. Therefore, the gamma ray detector 103 has a function for analyzing energy (gamma ray spectrometer).

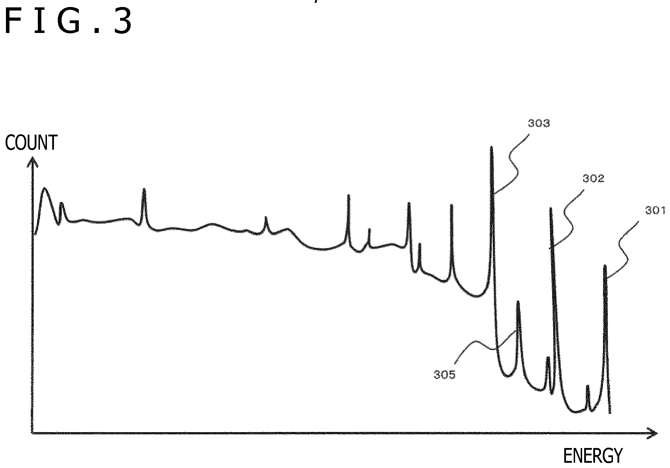

As an example, in the case where an energy spectrum is to be measured, such a measurement result as depicted in FIG. 3 is obtained by the gamma ray detector 103. In FIG. 3, a result when a plurality of full energy peaks are obtained is depicted. It is assumed that, as metal-containing plates, V, Cu and Ni described above are installed in the nuclear instrumentation tube. Further, it is assumed that the nuclear instrumentation tube is SUS. The full energy peak 301 is a full energy peak of a gamma ray of approximately 9 MeV emitted by a neutron capture reaction of Ni-58. The full energy peak 302 is a full energy peak of a gamma ray of approximately 8 MeV emitted by a neutron capture reaction of Cu-63. The full energy peak 303 is a full energy peak of a gamma ray of approximately 7 MeV emitted by a neutron capture reaction of V-51. The full energy peak 305 is a full energy peak of a gamma ray of approximately 7.6 MeV emitted by a neutron capture reaction of Fe-56. In the present embodiment, the energy of a gamma ray is information relating to the position in the axial direction of the metal-containing plates 101, and the gamma ray detector 103 has also a function for identifying the position of the metal-containing plate from the energy of the full energy peaks in an energy spectrum. In short, the count rate (energy) of the full energy peak 301 is information that provides a neutron flux at the position of the metal-containing plate 101c of FIG. 2; the count rate (energy) of the full energy peak 302 is information that provides a neutron flux at the position of the metal-containing plate 101e of FIG. 2; and the count rate (energy) of the full energy peak 303 is information that provides a neutron flux at the position of the metal-containing plate 101h of FIG. 2. The count rate depends upon a neutron flux at the position of the metal-containing plate 101, a nuclear reaction probability between the neutrons 14 and the metal-containing plate 101, a ratio at which the prompt gamma ray 15 emitted from the metal-containing plate 101 enters the gamma ray detector 103, a probability by which the prompt gamma ray 15 may be detected by the gamma ray detector 103 and so forth. Accordingly, if the information mentioned is known in advance, then it is possible to estimate a neutron flux at the metal-containing plate 101 from the count rate.

Since the measurement target is a high-energy gamma ray, a gamma ray of comparatively low energy existing much in an environment below the reactor pressure vessel 12 does not make an interfering component to an energy spectrum. Examples of interfering components with a spectrum are gamma rays that cannot be separated from peaks available to monitor neutron flux at metal positions and gamma rays emitted by a nuclear reaction between the nuclear instrumentation tube 102 and the neutrons 14. Full energy peaks of a measurement target (for example, the full energy peaks 301, 302 and 303) and full energy peaks of the interfering components preferably have energy ranges that are prevented from interfering with each other that do not compete with each other by selecting the metal-containing plates 101 taking the energy resolution of the gamma ray detector 103 into consideration. For example, the full energy peak 305 in FIG. 3 can be successfully separated from the full energy peaks 301, 302 and 303 of a measurement target. The interfering components at this time include, in addition to prompt gamma rays emitted by a nuclear reaction between the metal-containing plates 101 or the nuclear instrumentation tube 102 and the neutrons 14, prompt gamma rays emitted by a nuclear reaction between other structures and the neutrons 14 and decay gamma rays emitted by activation of the metal-containing plates 101, nuclear instrumentation tube 102 and in-reactor structures.

With the configuration of the present embodiment described above with reference to FIGS. 1 to 3, by installing the plurality of metal-containing plates 101 in the inside of the nuclear instrumentation tube 102 that does not extend through the reactor pressure vessel 12 such that energy and counting are measured using the gamma ray detector 103 installed outside the reactor pressure vessel 12, local power of the reactor can be monitored. Further, by providing metal-containing plates that are installed at a plurality of locations in an axial direction in the inside of the nuclear instrumentation tube and have principal components different from each other and the gamma ray detector that is provided outside the reactor pressure vessel and measures gamma rays emitted by a nuclear reaction between neutrons generated in the reactor and the metal-containing plates, it is possible to provide a reactor power monitoring apparatus suitable for monitoring of local power in an axial direction, which has similar spatial resolution of LPRMs.

### [Embodiment 2]

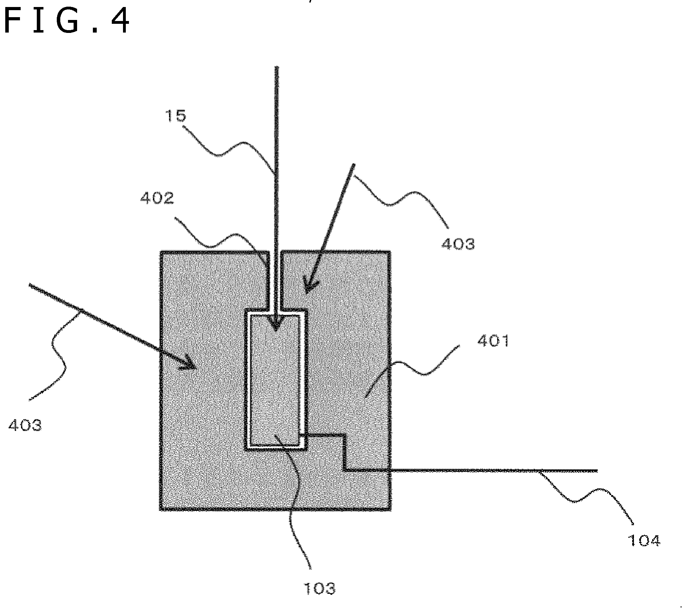

The target to be measured by the gamma ray detector 103 from among gamma rays that fly in a direction toward the gamma ray detector 103 is the prompt gamma ray 15 emitted from the metal-containing plates 101. The dose rate below the reactor pressure vessel 12 in which the gamma ray detector 103 is installed is excessively high for normal operation of, for example, a general Germanium semiconductor detector. Therefore, the gamma ray detector 103 is operated in a situation in which it is covered with a shield. FIG. 4 depicts an example of a configuration in which the gamma ray detector 103 is covered with a shield 401. The main factor of the dose rate below the reactor pressure vessel 12 is gamma rays flying thereto from the surroundings. For the convenience of description, gamma rays other than the prompt gamma ray 15 that is generated in the nuclear instrumentation tube 102, passes the nuclear instrumentation tube 102 and goes though the reactor pressure vessel 12 are referred to as environmental gamma ray 403. The environmental gamma ray 403 disturbs the gamma ray detector 103 from acquiring an energy spectrum. This is because a number of gamma rays greater than a number of gamma rays with which the gamma ray detector 103 can operate normally exist as the environmental gamma ray 403 below the reactor pressure vessel 12. Therefore, it is necessary to cover the gamma ray detector 103 with the shield 401 such that the environmental gamma ray 403 is prevented from reaching the gamma ray detector 103. At this time, by providing an opening 402 in a direction in which the metal-containing plates 101 exist, the prompt gamma ray 15 that is a measurement target is not blocked. At this time, the dimension of the opening 402 is determined by the count rate necessary to measure the prompt gamma ray 15 emitted from the metal-containing plates 101.

It is to be noted that, in FIG. 4, in order to send electricity to the gamma ray detector 103 or transmit a detection signal, a cable 104 is laid. Although the number of such cables 104 in FIG. 4 is one, a plurality of cables may be connected as occasion demands.

### [Embodiment 3]

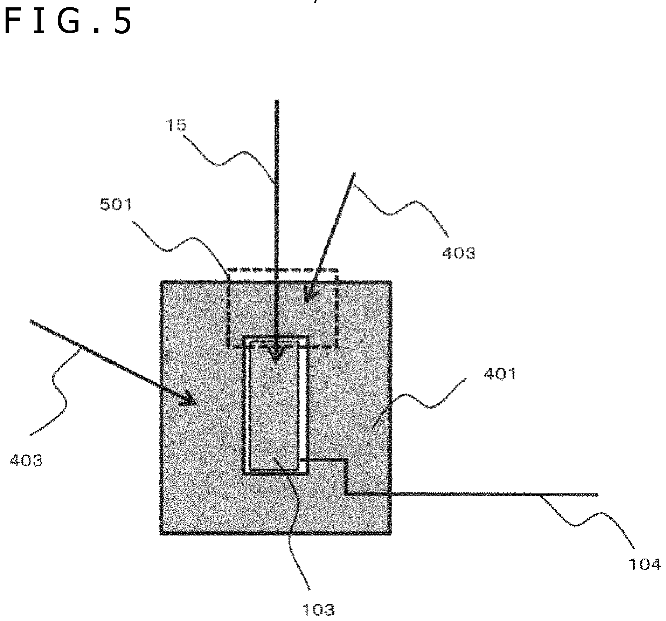

As another example of the shield structure, a configuration of FIG. 5 may be applied. FIG. 5 depicts a structure in which the opening 402 is eliminated from the configuration of FIG. 4 and an incident direction shielding portion 501 is provided such that the periphery of the gamma ray detector 103 is covered with a shield. In the case of such a shield structure in which the opening 402 is provided as depicted in FIG. 4, also low energy gamma rays flying from a direction of the nuclear instrumentation tube 102 are measured by the gamma ray detector 103. However, the measurement target in the present embodiment is the prompt gamma ray 15 of high energy and prompt gamma rays or decay gamma rays of low energy are not a measurement target. In order to prevent such gamma rays from entering the gamma ray detector 103, in FIG. 5, the opening 402 is not provided. Since the prompt gamma ray 15 that is a measurement target in the present embodiment has such high energy as several MeV or more, it can go through the shield even if the shield has a thickness with which gamma rays of low energy are blocked. Therefore, by applying the configuration of FIG. 5, the prompt gamma ray 15 that is not a measurement target and the environmental gamma ray 403 that enters at an angle at which it passes the opening 402 can be blocked. At this time, the thickness of the incident direction shielding portion 501 is determined by a count rate necessary to measure the prompt gamma ray 15 emitted from the metal-containing plates 101.

### [Embodiment 4]

As an embodiment different from the embodiments described above, a TIP alternative can be applied. A conventional BWR is configured such that a TIP guide pipe is installed in a nuclear instrumentation tube for a LPRM such that a plurality of TIP detectors move in the TIP guide pipes from the outside of the primary containment vessel and measure a neutron flux in the reactor as occasion demands. In the case where the present embodiment is applied as an alternative to this TIP, a driving mechanism for the TIP detector becomes unnecessary, and such a situation that a failure of the TIP detector or the driving mechanism results in failure in calibration of a plurality of LPRM detectors can be prevented. However, in this case, since it is necessary for the LPRM to be electrically connected to the outside of the reactor primary containment vessel 11, the nuclear instrumentation tube extends through the reactor pressure vessel.

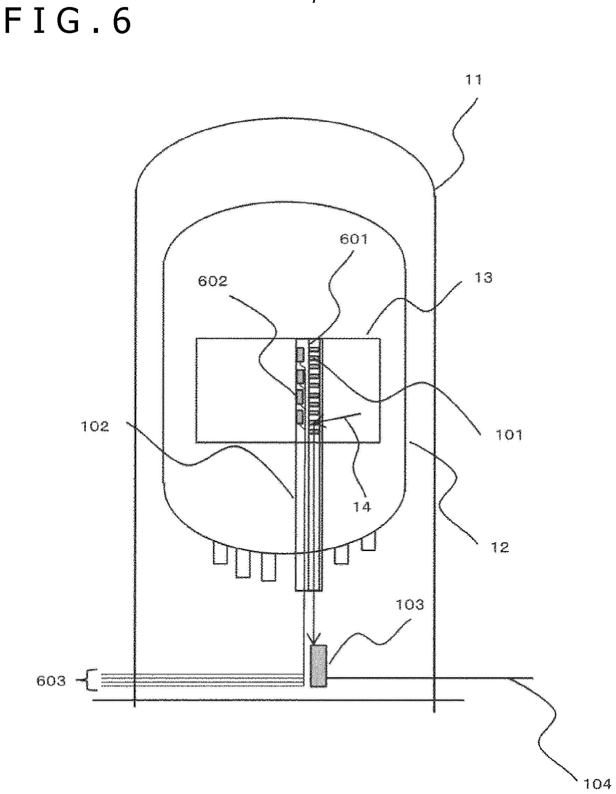

An example of a case in which the present embodiment is applied as an alternative to such a TIP as described above is described with reference to FIG. 6. The difference of FIG. 6 from FIG. 1 is that a TIP guide pipe 601 and LPRM detectors 602 exist in the nuclear instrumentation tube 102. Further, while, in FIG. 1, the metal-containing plates 101 are installed in the nuclear instrumentation tube 102, in FIG. 6, the metal-containing plates 101 are installed in the TIP guide pipe 601. In order to activate the LPRM detectors 602 to extract a detection signal of neutrons, LPRM cables 603 are connected to the LPRM detectors 602.

While the conventional BWR is structured such that the TIP guide pipe 601 is connected to the outside of the primary containment vessel, since the configuration of FIG. 6 does not include a TIP detector that is retracted to the outside of the primary containment vessel, the TIP guide pipe 601 may have a length to the inside of the reactor pressure vessel 12 or to the nuclear instrumentation tube 102 or the like. The gamma ray detector 103 is installed below the TIP guide pipe 601. The shield structure for the gamma ray detector 103 and the local power monitoring method that utilizes an energy spectrum are similar to those of FIGS. 3 to 5. Further, although the metal-containing plates 101 are installed in the TIP guide pipe, since the role is same as that where the metal-containing plates 101 are installed in the nuclear instrumentation tube 102, by reading the nuclear instrumentation tube 102 in the foregoing description of FIG. 2 as the TIP guide pipe 601, it becomes possible to monitor local power by installation of the metal-containing plates 101. In the configuration of FIG. 6, in monitoring of local power by the LPRM, a role as a rod block monitor, an average power range monitor or the like, which require high speed processing, is played. At this time, calibration for a variation of the sensitivity of the LPRM detectors 602 is carried out by the system of the present embodiment configured from the metal-containing plates 101 and the gamma ray detector 103. Although four LPRM detectors 602 are installed in an axial direction of the nuclear instrumentation tube 102, a prompt gamma ray 15 emitted from at least one metal-containing plates 101 at a position near to a position of the LPRM detector in the axial direction is measured by the gamma ray detector 103 and the LPRM detectors 602 is calibrated with the count rate. Further, monitoring of a local power distribution finer than that by the LPRM is carried out by the system of the present embodiment configured from the metal-containing plates 101 and the gamma ray detector 103.

By applying such a configuration of FIG. 6 as described above, a TIP alternative system that does not require a driving mechanism and is free from a risk of electric failure in the reactor pressure vessel can be constructed.

### Description of Reference Characters

- 11:: Reactor primary containment vessel
- 12:: Reactor pressure vessel
- 13:: Reactor core
- 14:: Neutron
- 15:: Prompt gamma ray
- 15c:: Prompt gamma ray
- 15e:: Prompt gamma ray
- 15h:: Prompt gamma ray
- 101:: Metal-containing plate
- 101a:: Metal-containing plate
- 101b:: Metal-containing plate
- 101c:: Metal-containing plate
- 101d:: Metal-containing plate
- 101e:: Metal-containing plate
- 101f:: Metal-containing plate
- 101g:: Metal-containing plate
- 101h:: Metal-containing plate
- 102:: Nuclear instrumentation tube
- 103:: Gamma ray detector
- 104:: Cable
- 301:: Full energy peak
- 302:: Full energy peak
- 303:: Full energy peak
- 305:: Full energy peak
- 401:: Shield
- 402:: Opening
- 403:: Environmental gamma ray
- 501:: Incident direction shielding portion
- 601:: TIP guide pipe
- 602:: LPRM detector
- 603:: LPRM cable

## Claims

1. A reactor power monitoring apparatus, comprising:
a plurality of metal-containing plates (101a-h); and
a gamma ray detector (103) installed outside a reactor pressure vessel (12),
**characterised in that**
the plurality of metal-containing plates (101a-h) are installed at different locations in an axial direction in an inside of a nuclear instrumentation tube (102) or a Traversing In-core Prove (TIP) guide pipe (601) and formed from principal components different from each other, and
the gamma ray detector (103) is configured to measure gamma rays (15) emitted by a nuclear reaction between neutrons (14) generated in the reactor and the metal-containing plates (101a-h).

2. The reactor power monitoring apparatus according to claim 1, wherein
the plurality of metal-containing plates (101a-h) are installed in the inside of the nuclear instrumentation tube (102), and
the nuclear instrumentation tube (102) does not extend through the reactor pressure vessel (12).

3. The reactor power monitoring apparatus according to claim 1, wherein the sensitivity of a Local Power Range Monitor (LPRM) detector (602) is calibrated based on a result of measurement of gamma rays (15) measured by the gamma ray detector (103).

4. The reactor power monitoring apparatus according to any preceding claim, wherein the gamma ray detector (103) is a gamma ray spectrometer capable of measuring an energy spectrum.

5. The reactor power monitoring apparatus according to claim 4, wherein the gamma ray detector (103) identifies positions of the metal-containing plates (101a-h) from energy of full energy peaks (301, 302, 303, 305) in the energy spectrum.

6. The reactor power monitoring apparatus according to any preceding claim, wherein energy of prompt gamma rays (15) generated by a nuclear reaction between the metal-containing plates (101a-h) and neutrons (14) is equal to or higher than 5 MeV.

7. The reactor power monitoring apparatus according to any preceding claim, wherein
the plurality of metal-containing plates (101a-h) are installed in the inside of the nuclear instrumentation tube (102), and
four or more metal-containing plates (101a-h) are provided per one nuclear instrumentation tube (102).

8. The reactor power monitoring apparatus according to claim 1 or 7, wherein the gamma ray detector (103) is covered with a shield (401).

9. The reactor power monitoring apparatus according to claim 8, wherein the shield (401) is a shield (401) with a collimator having an opening on a side.

## Patentansprüche

1. Vorrichtung zur Überwachung der Reaktorleistung, umfassend:
mehrere metallhaltige Platten (101a-h); und
einen Gammastrahlendetektor (103), der außerhalb eines Reaktordruckbehälters (12) installiert ist,
**dadurch gekennzeichnet, dass**
die mehreren metallhaltigen Platten (101a-h) an verschiedenen Stellen in einer axialen Richtung in einem Inneren einer Kerntechnikröhre (102) oder eines Traversing In-Core Prove (TIP) Führungsrohrs (601) installiert und aus voneinander verschiedenen Hauptkomponenten gebildet sind, und
der Gammastrahlendetektor (103) so konfiguriert ist, dass er Gammastrahlen (15) misst, die durch eine Kernreaktion zwischen in dem Reaktor erzeugten Neutronen (14) und den metallhaltigen Platten (101a-h) emittiert werden.

2. Vorrichtung zur Überwachung der Reaktorleistung nach Anspruch 1, wobei
die mehreren metallhaltigen Platten (101a-h) im Inneren der Kerntechnikröhre (102) installiert sind, und
die Kerntechnikröhre (102) nicht durch den Reaktordruckbehälter (12) verläuft.

3. Vorrichtung zur Überwachung der Reaktorleistung nach Anspruch 1, wobei die Empfindlichkeit eines Local Power Range Monitor (LPRM) Detektors (602) auf Grundlage eines Ergebnisses der Messung von Gammastrahlen (15) kalibriert wird, die durch den Gammastrahlendetektor (103) gemessen wurde.

4. Vorrichtung zur Überwachung der Reaktorleistung nach einem der vorstehenden Ansprüche, wobei der Gammastrahlendetektor (103) ein Gammastrahlenspektrometer ist, das zur Messung eines Energiespektrums geeignet ist.

5. Vorrichtung zur Überwachung der Reaktorleistung nach Anspruch 4, wobei der Gammastrahlendetektor (103) Positionen der metallhaltigen Platten (101a-h) aus der Energie der Vollenergiespitzen (301, 302, 303, 305) in dem Energiespektrum identifiziert.

6. Vorrichtung zur Überwachung der Reaktorleistung nach einem der vorstehenden Ansprüche, wobei die Energie von, durch eine Kernreaktion zwischen den metallhaltigen Platten (101a-h) und Neutronen (14) erzeugter, prompter Gammastrahlung (15) mindestens 5 MeV beträgt.

7. Vorrichtung zur Überwachung der Reaktorleistung nach einem der vorstehenden Ansprüche, wobei
die mehreren metallhaltigen Platten (101a-h) im Inneren der Kerntechnikröhre (102) installiert sind, und
mindestens vier metallhaltige Platten (101a-h) pro Kerntechnikröhre (102) vorgesehen sind.

8. Vorrichtung zur Überwachung der Reaktorleistung nach Anspruch 1 oder 7, wobei der Gammastrahlendetektor (103) mit einer Abschirmung (401) abgedeckt ist.

9. Vorrichtung zur Überwachung der Reaktorleistung nach Anspruch 8, wobei die Abschirmung (401) eine Abschirmung (401) mit einem Kollimator ist, der eine Öffnung auf einer Seite aufweist.

## Revendications

1. Appareil de surveillance de puissance de réacteur, comprenant :
une pluralité de plaques contenant du métal (101a-h) ; et
un détecteur (103) de rayons gamma installé à l'extérieur d'une cuve sous pression de réacteur (12),
**caractérisé en ce que**
la pluralité de plaques contenant du métal (101a-h) sont installées en différents emplacements dans un sens axial dans un intérieur d'un tube d'instrumentation nucléaire (102) ou d'un tuyau de guidage (601) de système d'étalonnage de chambre de mesure neutronique (TIP) et constituées de composants principaux différents les uns des autres, et
le détecteur (103) de rayons gamma est configuré pour mesurer des rayons gamme (15) émis par une réaction nucléaire entre des neutrons (14) générés dans le réacteur et les plaques contenant du métal (101a-h).

2. Appareil de surveillance de puissance de réacteur selon la revendication 1, dans lequel
la pluralité de plaques contenant du métal (101a-h) sont installées dans l'intérieur du tube d'instrumentation nucléaire (102), et
le tube d'instrumentation nucléaire (102) ne s'étend pas à travers la cuve sous pression de réacteur (12).

3. Appareil de surveillance de puissance de réacteur selon la revendication 1, dans lequel la sensibilité d'un détecteur (602) de moniteur de plage de puissance locale (LPRM) est étalonnée sur la base d'un résultat de mesure de rayons gamma (15) mesurés par le détecteur (103) de rayons gamma.

4. Appareil de surveillance de puissance de réacteur selon une quelconque revendication précédente, dans lequel le détecteur (103) de rayons gamma est un spectromètre à rayons gamma apte à mesurer un spectre d'énergie.

5. Appareil de surveillance de puissance de réacteur selon la revendication 4, dans lequel le détecteur (103) de rayons gamma identifie des positions des plaques contenant du métal (101a-h) à partir d'une énergie de pics de pleine énergie (301, 302, 303, 305) dans le spectre d'énergie.

6. Appareil de surveillance de puissance de réacteur selon une quelconque revendication précédente, dans lequel une énergie de rayons gamma (15) instantanés générés par une réaction nucléaire entre les plaques contenant du métal (101a-h) et des neutrons (14) est égale ou supérieure à 5 MeV.

7. Appareil de surveillance de puissance de réacteur selon une quelconque revendication précédente, dans lequel
la pluralité de plaques contenant du métal (101a-h) sont installées dans l'intérieur du tube d'instrumentation nucléaire (102), et
quatre plaques contenant du métal (101a-h) ou plus sont prévues pour un tube d'instrumentation nucléaire (102).

8. Appareil de surveillance de puissance de réacteur selon la revendication 1 ou 7, dans lequel le détecteur (103) de rayons gamma est recouvert avec un blindage (401).

9. Appareil de surveillance de puissance de réacteur selon la revendication 8, dans lequel le blindage (401) est un blindage (401) avec un collimateur ayant une ouverture sur un côté.
